# EUROPEAN PATENT APPLICATION

(11) **EP 4 800 897 A1**
(43) Date of publication of application: **02.09.2026**
(21) Application number: 23956717.5
(22) Date of filing: 23.10.2023
(51) Int. Cl.: H02K 11/25

(54) **MONITORING DEVICE, MONITORING SYSTEM, AND MONITORING METHOD**

(71) Applicant: Mitsubishi Generator Co., Ltd., Kobe City, Hyogo 652-8555 (JP)
(72) Inventor: KAKIMOTO, Tadaaki, Tokyo 100-8332 (JP); TONOSU, Shigeki, Tokyo 100-8332 (JP); MORITA, Tetsuji, Tokyo 100-8332 (JP)
(74) Representative: Witte, Weller & Partner Patentanwälte mbB
(86) International application number: PCT/JP2023/038122
(87) International publication number: WO 2025/088658

(57) **Abstract**

A monitoring device for monitoring a rotating electric machine provided with a stator frame accommodating a rotor and a stator comprises: an actual temperature distribution acquisition unit for acquiring actual temperature distribution data indicating a distribution of an actual temperature inside the stator frame through photographing by an infrared camera disposed inside the stator frame; an estimated temperature distribution acquisition unit for acquiring upon-photographing estimated temperature distribution data indicating a distribution of an estimated temperature inside the stator frame, the distribution corresponding to an upon-photographing operation parameter as an operation parameter of the rotating electric machine upon the photographing by the infrared camera; and an abnormality determination unit for determining whether an abnormality has occurred in the rotating electric machine based on a result of comparison between the actual temperature indicated by the actual temperature distribution data and the estimated temperature indicated by the upon-photographing estimated temperature distribution data.

## Description

### TECHNICAL FIELD

The present disclosure relates to a monitoring device, a monitoring system, and a monitoring method for monitoring a rotating electric machine such as a generator or an electric motor for an abnormality.

### BACKGROUND ART

In a monitoring system disclosed in Patent Document 1, a small-sized camera is disposed inside a rotating electric machine. In this document, whether an abnormality has occurred inside the rotating electric machine is determined through observation by using the small-sized camera.

### CITATION LIST

### PATENT DOCUMENT

Patent Document 1: Japanese Laid-Open Patent Publication (translation of PCT application) No. 2015-528277

### SUMMARY OF THE INVENTION

### PROBLEM TO BE SOLVED BY THE INVENTION

In the above monitoring system, a sign of an abnormality visually recognizable through a visible light camera is difficult to detect before the abnormality occurs.

An object of the present disclosure is to provide a monitoring device, a monitoring system, and a monitoring method that enable early detection of an abnormality in a rotating electric machine.

### MEANS TO SOLVE THE PROBLEM

A monitoring device according to at least one embodiment of the present disclosure is
a monitoring device for monitoring a rotating electric machine provided with a stator frame accommodating a rotor and a stator, the monitoring device comprising:
an actual temperature distribution acquisition unit for acquiring actual temperature distribution data indicating a distribution of an actual temperature inside the stator frame through photographing by an infrared camera disposed inside the stator frame;
an estimated temperature distribution acquisition unit for acquiring upon-photographing estimated temperature distribution data indicating a distribution of an estimated temperature inside the stator frame, the distribution corresponding to an upon-photographing operation parameter as an operation parameter of the rotating electric machine upon the photographing by the infrared camera; and
an abnormality determination unit for determining whether an abnormality has occurred in the rotating electric machine based on a result of comparison between the actual temperature indicated by the actual temperature distribution data and the estimated temperature indicated by the upon-photographing estimated temperature distribution data.

A monitoring system according to one embodiment of the present disclosure comprises:
the above monitoring device; and
the infrared camera.

A monitoring method according to one embodiment of the present disclosure is
a monitoring method for monitoring a rotating electric machine provided with a stator frame accommodating a rotor and a stator, the monitoring method comprising:
an actual temperature distribution acquisition step of acquiring actual temperature distribution data indicating a distribution of an actual temperature inside the stator frame through photographing by an infrared camera disposed inside the stator frame;
an estimated temperature distribution acquisition step of acquiring upon-photographing estimated temperature distribution data indicating a distribution of an estimated temperature inside the stator frame, the distribution corresponding to an upon-photographing operation parameter as an operation parameter of the rotating electric machine upon the photographing by the infrared camera; and
an abnormality determination step of determining whether an abnormality has occurred in the rotating electric machine based on a result of comparison between the actual temperature indicated by the actual temperature distribution data and the estimated temperature indicated by the upon-photographing estimated temperature distribution data.

### EFFECT OF THE INVENTION

The present disclosure makes it possible to provide a monitoring device, a monitoring system, and a monitoring method that enable early detection of an abnormality in a rotating electric machine.

### BRIEF DESCRIPTION OF THE DRAWINGS

[FIG. 1] FIG. 1 is a schematic diagram showing an internal configuration of a rotating electric machine according to an embodiment.
[FIG. 2] FIG. 2 is a schematic diagram showing a monitoring system according to an embodiment.
[FIG. 3] FIG. 3 is a schematic diagram showing a basic configuration of a monitoring device according to an embodiment.
[FIG. 4] FIG. 4 is a schematic diagram showing an overview of abnormality determination processing according to an embodiment.
[FIG. 5] FIG. 5 is a schematic diagram (first example) showing constituents that may be additionally provided to the monitoring device, according to an embodiment.
[FIG. 6] FIG. 6 is a schematic diagram of a database according to an embodiment.
[FIG. 7] FIG. 7 is a schematic diagram (second example) showing constituents that may be additionally provided to the monitoring device, according to an embodiment.
[FIG. 8] FIG. 8 is a schematic diagram showing an actual temperature distribution image and an estimated temperature distribution image according to an embodiment.
[FIG. 9] FIG. 9 is a schematic diagram showing a state before the actual temperature distribution image is subjected to gradation-lowering processing and a state after the actual temperature distribution image is subjected to gradation-lowering processing, according to an embodiment.
[FIG. 10] FIG. 10 is a flowchart showing a monitoring method for the rotating electric machine according to an embodiment.
[FIG. 11] FIG. 11 is a flowchart showing steps of the monitoring method that are subsequent to the steps in FIG. 10.
[FIG. 12] FIG. 12 is a flowchart showing display control processing according to an embodiment.

### DESCRIPTION OF EMBODIMENTS

Hereinafter, several embodiments of the present disclosure will be described with reference to the accompanying drawings. However, dimensions, materials, shapes, relative arrangement, and the like of components described in the embodiments or shown in the drawings are not intended to limit the scope of the present disclosure thereto and are merely explanatory examples.

For example, each of expressions indicating relative or absolute arrangement such as "in a certain direction", "along a certain direction", "parallel", "orthogonal", "center", "concentric", or "coaxial" not only strictly indicates such arrangement but also indicates a state where a relative displacement has occurred with a tolerance or with such an angle or a distance that the same function is obtained.

For example, each of expressions indicating that things are in an equivalent state such as "identical", "equal", and "even" not only indicates a strictly equivalent state but also indicates a state where there is a tolerance or such a difference that the same function is obtained.

For example, each of expressions indicating shapes such as a quadrangular shape and a cylindrical shape not only indicates a shape such as a quadrangular shape or a cylindrical shape in a geometrically strict sense but also indicates a shape including a recess/projection, a chamfered portion, or the like within such a range that the same effect is obtained.

Meanwhile, expressions of "provided with (comprising)", "including", and "having" a constituent are not exclusive expressions excluding presence of another constituent.

Similar constituents will be denoted by the same reference characters, and description thereof may be omitted.

### <Overview of Rotating Electric Machine 1>

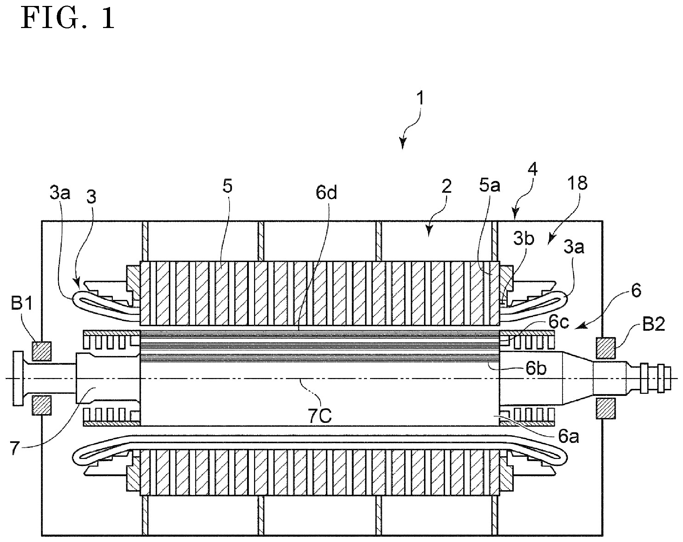

FIG. 1 is a schematic diagram of a rotating electric machine 1 according to an embodiment of the present disclosure. The rotating electric machine 1 is provided with: a rotor 6 obtained by incorporating a rotor coil 6b to a rotor core 6a integrated with a rotor shaft 7; a stator 2 located on an outer circumferential side relative to the rotor 6; and a stator frame 4 accommodating the rotor 6 and the stator 2. The stator frame 4 supports the rotor shaft 7 via bearings B1 and B2. In the following description, a direction in which an axial line 7C of the rotor shaft 7 extends is sometimes simply referred to as "axial direction".

The rotor 6 includes: the rotor core 6a fixed to the rotor shaft 7; and the rotor coil 6b which is a field coil wound on the rotor core 6a. The stator 2 includes a stator core 5 and a stator coil 3 wound on the stator core 5. The stator coil 3 has: coil ends 3a protruding in the axial direction from the stator core 5; and a lead-out portion 3b connected to an external electrical system (not shown).

The rotor shaft 7 is coupled to a prime mover (not shown). In an embodiment in which the rotating electric machine 1 is a generator, the prime mover may be a turbine such as a gas turbine or a steam turbine. In this case, the generator may be a synchronous generator. The operation principle of the synchronous generator is as follows. When the prime mover rotates the rotor 6 obtained by incorporating the rotor coil 6b to the rotor core 6a integrated with the rotor shaft 7, a field current flowing through the rotor coil 6b generates a circumferential-direction magnetic flux. The magnetic flux interlinks with the stator coil 3 through rotation of the rotor 6, whereby power is generated. The generated power is supplied via the lead-out portion 3b to the external electrical system (more specifically, a load).

A rotating electric machine 1 according to another embodiment may be an electric motor. The electric motor is, for example, a synchronous electric motor, and the operation principle thereof is as follows. By supplying power from the external electrical system (more specifically, a power supply) to the stator coil 3, current flows through the stator coil 3. Magnetic attraction force is generated owing to an interaction between a rotating magnetic field generated through current conduction control on the stator coil 3 and a field-system magnetic field generated by a field current flowing through the rotor coil 6b, and a rotary torque is generated, whereby the rotor 6 is rotated.

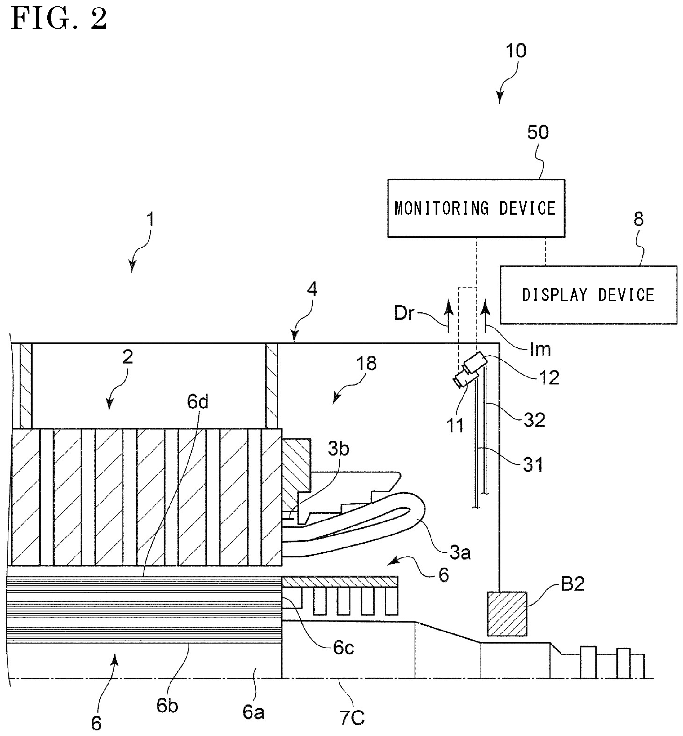

When the rotating electric machine 1 is operated as described above, the temperatures of each of the coil ends 3a of the stator coil 3, the lead-out portion 3b of the stator coil 3, each of end portions 5a in the axial direction of the stator core 5, each of end portions 6c in the axial direction of the rotor core 6a, and an outer circumference portion 6d of the rotor core 6a become high. In the present embodiment, at least one of the above five constituents is used as a to-be-photographed object 18 for an infrared camera 11 (described later) (see FIG. 2), and whether an abnormality has occurred in the rotating electric machine 1 is determined. The "to-be-photographed object 18" described below corresponds to at least one of the coil end 3a, the lead-out portion 3b, the end portion 5a of the stator core 5, the end portion 6c of the rotor core 6a, or the outer circumference portion 6d of the rotor core 6a.

The to-be-photographed object 18 preferably includes at least one of the coil end 3a or the lead-out portion 3b. This is because thermal damage to the coil end 3a and the lead-out portion 3b might cause a serious abnormality such as a short circuit of the rotating electric machine 1. By detecting the above damage in advance, a short circuit fault can be avoided in advance.

### <Basic Configuration of Monitoring System 10>

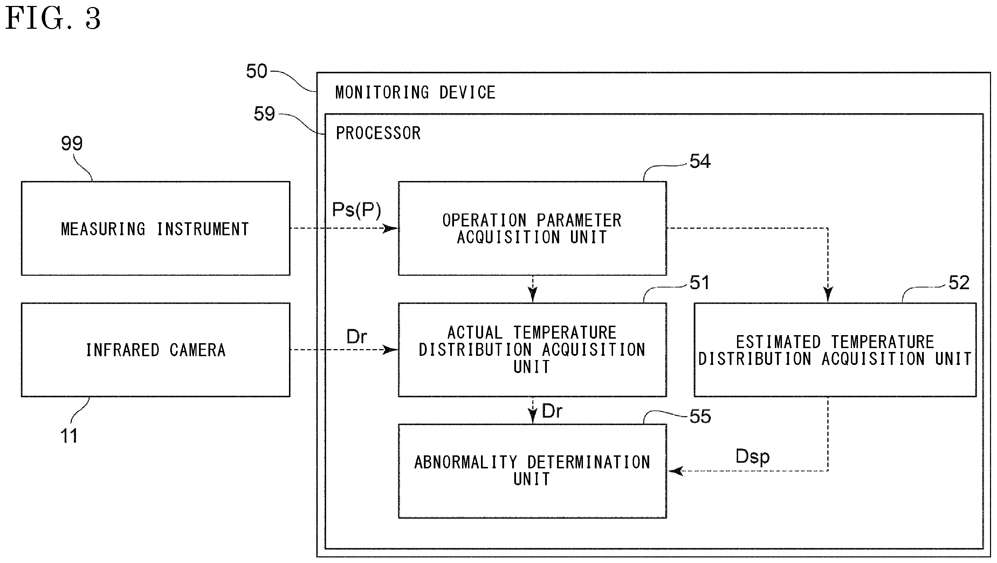

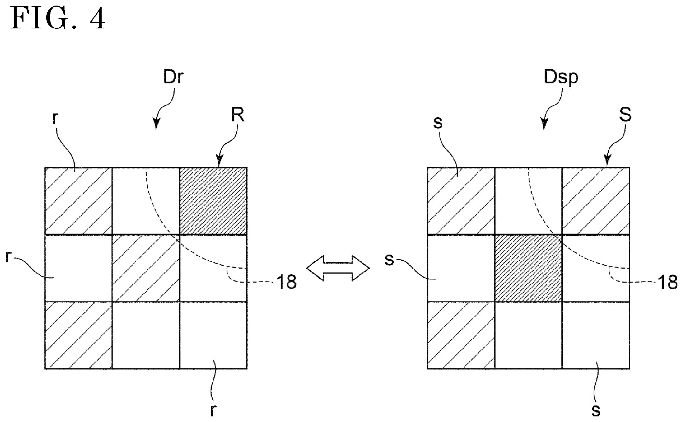

A monitoring system 10 provided with a monitoring device 50 for monitoring the rotating electric machine 1 will be described with reference to FIG. 2 to FIG. 4. FIG. 2 is a schematic diagram showing the monitoring system 10 according to an embodiment of the present disclosure. FIG. 3 is a schematic diagram showing a basic configuration of the monitoring device 50 according to an embodiment of the present disclosure. FIG. 4 is a schematic diagram showing an overview of abnormality determination processing according to an embodiment of the present disclosure.

As shown in FIG. 2, the monitoring system 10 is provided with: the infrared camera 11 disposed inside the stator frame 4; and the monitoring device 50 for monitoring the rotating electric machine 1. The infrared camera 11 is configured to generate actual temperature distribution data Dr indicating a distribution of an actual temperature inside the stator frame 4, and the actual temperature distribution data Dr is transmitted to the monitoring device 50 located outside of the stator frame 4. The infrared camera 11 may be electrically connected via a wireless network to the monitoring device 50 or may be electrically connected via a cable to the monitoring device 50. The actual temperature distribution data Dr will be described later in detail.

The monitoring system 10 is further provided with a visible light camera 12, an infrared camera rail 31, a visible light camera rail 32, and a display device 8. The visible light camera 12 is disposed inside the stator frame 4. Taken image data Im generated through photographing by the visible light camera 12 is transmitted to the monitoring device 50. The visible light camera 12 may be electrically connected via a wireless network to the monitoring device 50 or may be electrically connected via a cable to the monitoring device 50. The visible light camera 12 can photograph the to-be-photographed object 18 for the infrared camera 11. The display device 8 is configured to display the actual temperature distribution data Dr generated by the infrared camera 11 or the taken image data Im generated by the visible light camera 12.

The infrared camera rail 31 and the visible light camera rail 32 movably support the infrared camera 11 and the visible light camera 12 inside the stator frame 4, respectively. Consequently, photographing ranges of the infrared camera 11 and the visible light camera 12 can be widened, whereby monitoring can be performed over wide ranges inside the stator frame 4.

In FIG. 2 as a schematic diagram, each of the numbers of the infrared cameras 11 and the visible light cameras 12 is one. However, the present disclosure is not limited thereto, and each of the numbers may be two or more. In this case, each of the numbers of the infrared camera rails 31 and the visible light camera rails 32 is also two or more. Furthermore, the visible light camera 12, the infrared camera rail 31, the visible light camera rail 32, and the display device 8 are dispensable constituents in the present disclosure. The monitoring system 10 may dispense with at least one of these constituents.

As shown in FIG. 3, the monitoring device 50 is provided with a processor 59. The processor 59 is provided with an actual temperature distribution acquisition unit 51, an operation parameter acquisition unit 54, an estimated temperature distribution acquisition unit 52, and an abnormality determination unit 55. The actual temperature distribution acquisition unit 51 is configured to acquire the actual temperature distribution data Dr from the infrared camera 11.

As shown on the left side of FIG. 4, the actual temperature distribution data Dr is image data indicating the manner in which the actual temperature is distributed in a region R corresponding to the photographing range of the infrared camera 11. More specifically, the region R includes a plurality of partial regions r, and each of the partial regions r is assigned with data indicating an actual temperature (in FIG. 4, among the partial regions r, a partial region r that is hatched darker has a higher temperature). The data indicating an actual temperature may be specific numerical value data, and more specifically, may be a gradation value based on the temperature. The gradation value may be composed of gradation values in red (R), green (G), and blue (B). At least one of the plurality of partial regions r indicated by the actual temperature distribution data Dr is assigned with a surface temperature of the above to-be-photographed object 18. That is, at least one of the plurality of partial regions r is understood to be an image region showing the to-be-photographed object 18.

With reference back to FIG. 3, the operation parameter acquisition unit 54 is configured to acquire an operation parameter P of the rotating electric machine 1. The operation parameter P is a parameter that indicates an operation state of the rotating electric machine 1 and that influences the temperature of the to-be-photographed object 18. The operation parameter P acquired by the operation parameter acquisition unit 54 is transmitted to the actual temperature distribution acquisition unit 51 and the estimated temperature distribution acquisition unit 52.

The operation parameter P is measured by a measuring instrument 99 which is at least one of measurement devices (not shown) disposed in the rotating electric machine 1. Each time any of predetermined timings arrives, the measuring instrument 99 measures the operation parameter P, and the measured operation parameter P is transmitted to the operation parameter acquisition unit 54. The timings for measurement by the measuring instrument 99 include a timing for the infrared camera 11 to perform photographing. Hereinafter, the operation parameter P upon photographing by the infrared camera 11 is sometimes referred to as "upon-photographing operation parameter Ps".

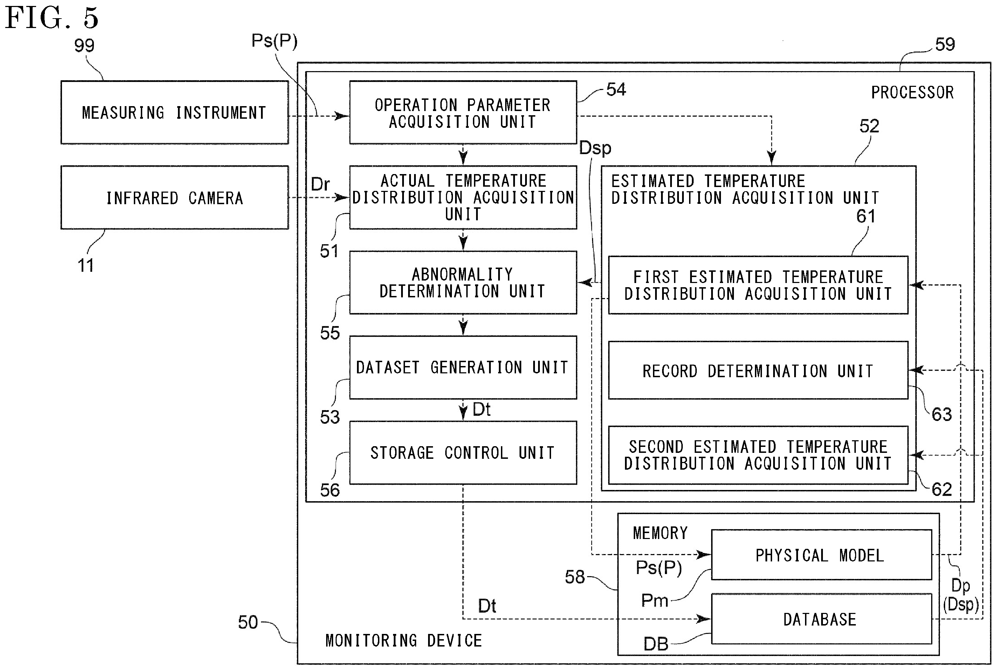

The estimated temperature distribution acquisition unit 52 is configured to acquire upon-photographing estimated temperature distribution data Dsp based on the upon-photographing operation parameter Ps. The upon-photographing estimated temperature distribution data Dsp indicates a distribution of an estimated temperature inside the stator frame 4, the distribution corresponding to the upon-photographing operation parameter Ps. In other words, the upon-photographing estimated temperature distribution data Dsp indicates a distribution of an estimated temperature inside the stator frame 4 at the timing of the acquisition of the actual temperature distribution data Dr. As described later in detail, the estimated temperature may be an estimated value obtained by using a physical model Pm (see FIG. 5) or may be an actual temperature (i.e., a temperature estimated based on a past record) obtained through photographing by the infrared camera 11 in the past.

As shown on the right side of FIG. 4, the upon-photographing estimated temperature distribution data Dsp is image data indicating the manner in which the estimated temperature is distributed in a region S corresponding to the region R in the actual temperature distribution data Dr. The region S includes a plurality of partial regions s, and each of the partial regions s is assigned with data indicating an estimated temperature (in FIG. 4, among the partial regions s, a partial region s that is hatched darker has a higher temperature). At least one of the plurality of partial regions s corresponds to the above partial region r understood to be the image region showing the to-be-photographed object 18. Such a correspondence relationship between the partial regions r and s is known in advance and is utilized in processing for comparison between the upon-photographing estimated temperature distribution data Dsp and the actual temperature distribution data Dr.

With reference back to FIG. 3, the abnormality determination unit 55 is configured to determine whether an abnormality has occurred in the rotating electric machine 1 based on a result of comparison between the actual temperature indicated by the actual temperature distribution data Dr and the estimated temperature indicated by the upon-photographing estimated temperature distribution data Dsp.

An example of more specific determination processing by the abnormality determination unit 55 will be presented with reference to FIG. 4. A difference value (more specifically, a temperature difference) between the actual temperature in each of the partial regions r and the estimated temperature in a partial region s corresponding to the partial region r is calculated. When the difference value between certain partial regions r and s exceeds a predetermined value, the abnormality determination unit 55 determines that an abnormality has occurred in the rotating electric machine 1. For example, when the temperature of the to-be-photographed object 18 rapidly increases owing to a certain factor, the difference value between certain partial regions r and s exceeds the predetermined value. In this case, it is determined that an abnormality has occurred in the rotating electric machine 1. Meanwhile, when the difference values between all of the partial regions r and s are equal to or smaller than the predetermined value, it is determined that no abnormality has occurred in the rotating electric machine 1.

The present disclosure is not limited to the feature in which difference values in temperature are calculated between all of the partial regions r and s indicated by the actual temperature distribution data Dr and the upon-photographing estimated temperature distribution data Dsp. For example, it is also allowable to calculate a difference value in temperature only between a partial region r corresponding to the image region showing the to-be-photographed object 18 and a partial region s corresponding to the partial region r.

In the above configuration, the abnormality determination unit 55 can determine, when the difference value between the actual temperature and the estimated temperature is large, that an abnormality has occurred in the rotating electric machine 1. Since whether an abnormality has occurred in the rotating electric machine 1 is determined based on the temperatures, a sign of an abnormality to be visually recognized through the visible light camera 12 or the like can be detected before the abnormality actually occurs. Therefore, a monitoring device 50 capable of detecting such an abnormality in the rotating electric machine 1 early is realized.

### <Additional Constituents (First Example) of Monitoring Device 50>

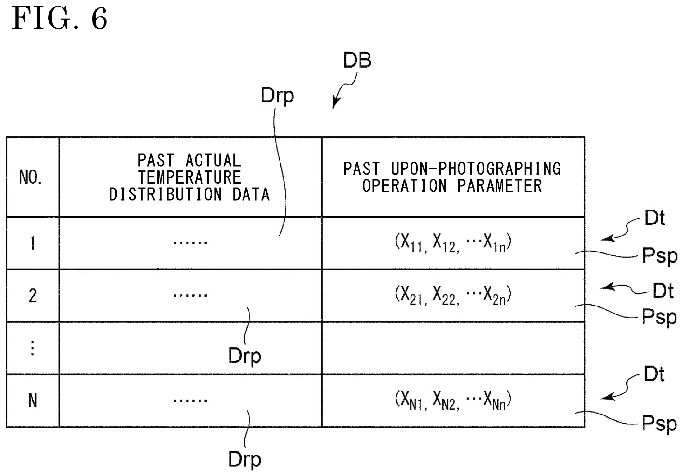

FIG. 5 is a schematic diagram (first example) showing constituents that may be additionally provided to the monitoring device 50. In FIG. 5, constituents identical to those in FIG. 4 are denoted by the same reference characters. FIG. 6 is a schematic diagram of a database DB according to an embodiment of the present disclosure.

The estimated temperature distribution acquisition unit 52 includes a first estimated temperature distribution acquisition unit 61 configured to acquire the upon-photographing estimated temperature distribution data Dsp by using a physical model Pm. The physical model Pm is stored in a memory 58 which is a constituent of the monitoring device 50, and the estimated temperature distribution acquisition unit 52 reads out the physical model Pm from the memory 58 and performs calculation processing defined by the physical model Pm.

The physical model Pm is configured to output, when the operation parameter P is inputted thereto, estimated temperature distribution data Dp indicating a distribution of the estimated temperature inside the stator frame 4. In other words, the operation parameter P is inputted to the physical model Pm as an input parameter, and the estimated temperature distribution data Dp is outputted from the physical model Pm as an output parameter. The outputted estimated temperature distribution data Dp is treated as the upon-photographing estimated temperature distribution data Dsp by the first estimated temperature distribution acquisition unit 61. The operation parameter P in this case is composed of a plurality of parameters.

The physical model Pm in this example is a model based on multiple-regression analysis and is defined by, for example, the following formula (1). $Y = {a}_{0} + {Σa}_{n} {X}_{n}$

In formula (1), n represents any natural number. Y represents a response variable (i.e., output parameter), a₀ represents a constant, aₙ represents a weighting coefficient, and Xₙ represents an explanatory variable (i.e., input parameter).

A more specific example of formula (1) is expressed as formula (1A). $Y = {a}_{0} + {a}_{1} {X}_{1} + {a}_{2} {X}_{3} + {a}_{3} {X}_{3} + {a}_{4} {X}_{4} + {a}_{5} {X}_{5}$

In formula (1A), Y represents a temperature at any point in the taken image, X₁ represents an active power of the rotating electric machine 1, X₂ represents a reactive power of the rotating electric machine 1, X₃ represents a rotation speed of the rotor 6, X₄ represents a voltage at the lead-out portion 3b of the rotating electric machine 1, and X₅ represents a temperature of cooling gas. X1 to X₅ are operation parameters P measured by the measuring instrument 99. The operation parameters P are not limited to parameters measured by the measuring instrument 99 and may be parameters obtained through various kinds of calculation. The estimated temperature distribution data Dp is obtained by obtaining multi-point temperatures according to formula (1A) so as to cover all the points in the taken image. In the case of rough division without covering all the points in the taken image, the estimated temperature distribution data Dp is obtained through extrapolation or linear interpolation between the temperatures at the respective points obtained according to formula (1A).

A physical model Pm according to another embodiment may be a model based on a neural network. In this case, the physical model Pm may be stored in a server installed at a remote location instead of being stored in the memory 58 of the monitoring device 50. The server receives the operation parameter P transmitted from the first estimated temperature distribution acquisition unit 61, and the received operation parameter P is inputted to the physical model Pm. The server transmits, to the first estimated temperature distribution acquisition unit 61, estimated temperature distribution data Ds outputted from the physical model Pm. The transmitted estimated temperature distribution data Dp is treated as the upon-photographing estimated temperature distribution data Dsp and is used by the abnormality determination unit 55 for processing for comparison to the actual temperature distribution data Dr.

In the above configuration, the upon-photographing estimated temperature distribution data Dsp is acquired by inputting the upon-photographing operation parameter Ps to the physical model Pm. Consequently, the abnormality determination unit 55 can determine, without using data indicating a distribution of a past actual temperature, whether an abnormality has occurred in the rotating electric machine 1. Therefore, even in a case where the rotating electric machine 1 is operated at an operation point at which operation has not been performed in the past, the abnormality determination unit 55 can determine whether an abnormality has occurred in the rotating electric machine 1. As a more specific example, even when a new rotating electric machine 1 has been installed and no operation records of the rotating electric machine 1 have been accumulated, the abnormality determination unit 55 can determine, by using the physical model Pm, whether an abnormality has occurred.

Description of the additional constituents of the monitoring device 50 will be continued with reference to FIG. 5 and FIG. 6. A database DB in which a dataset Dt is saved is stored in the memory 58 of the monitoring device 50. In the dataset Dt, past actual temperature distribution data Drp and a past upon-photographing operation parameter Psp are associated with each other. Here, the past actual temperature distribution data Drp is actual temperature distribution data Dr that has been acquired in the past by the actual temperature distribution acquisition unit 51 and that is acquired each time the infrared camera 11 is activated. The past upon-photographing operation parameter Psp is an operation parameter P measured by the measuring instrument 99 when the past actual temperature distribution data Drp is acquired. In other words, the past upon-photographing operation parameter Psp is a past operation parameter P measured by the measuring instrument 99 each time the infrared camera 11 is activated. In the database DB, a plurality of such datasets Dt are stored (see FIG. 6). The past actual temperature distribution data Drp included in each of the datasets Dt may be saved in an image data format.

In the present embodiment, when the actual temperature distribution acquisition unit 51 acquires a newest piece of the actual temperature distribution data Dr, whether a piece of the past actual temperature distribution data Drp that is suitable for comparison to the newest piece of the actual temperature distribution data Dr is stored in the database DB is determined. Such determination is performed by searching the database DB for a past upon-photographing operation parameter Psp that is identical to the upon-photographing operation parameter Ps obtained when the newest piece of the actual temperature distribution data Dr has been acquired. When such an appropriate piece of the past actual temperature distribution data Drp is stored, whether an abnormality has occurred in the rotating electric machine 1 is determined based on a result of comparison between this piece of the past actual temperature distribution data Drp and the newest piece of the actual temperature distribution data Dr. That is, in the abnormality determination processing according to the present embodiment, the past actual temperature distribution data Drp to be compared to the actual temperature distribution data Dr is used as the upon-photographing estimated temperature distribution data Dsp.

In order to achieve the above function, the estimated temperature distribution acquisition unit 52 shown in FIG. 5 further includes a record determination unit 63 and a second estimated temperature distribution acquisition unit 62. The record determination unit 63 is configured to determine whether the past upon-photographing operation parameter Psp that can be regarded as being identical to the upon-photographing operation parameter Ps obtained when the newest piece of the actual temperature distribution data Dr has been acquired is included in any of the datasets Dt stored in the database DB.

For example, the upon-photographing operation parameter Ps obtained when the newest piece of the actual temperature distribution data Dr has been acquired is assumed to include n parameters which are X₁, X₂, ··· , and Xₙ. Whether a past upon-photographing operation parameter Psp that differs from each of the n parameters by an amount equal to or smaller than a threshold value is included in any of the datasets Dt is determined. The threshold value may differ among the n parameters. In this case, each of the threshold values may be equal to or smaller than several percents of the corresponding parameter. When the above past upon-photographing operation parameter Psp is included in any of the datasets Dt, the record determination unit 63 makes an affirmative determination result. Meanwhile, when the above past upon-photographing operation parameter Psp is not included in any of the datasets Dt, the record determination unit 63 makes a negative determination result.

In a case where the record determination unit 63 makes the affirmative determination result, the second estimated temperature distribution acquisition unit 62 acquires, from the dataset Dt, a piece of the past actual temperature distribution data Drp that is associated with the past upon-photographing operation parameter Psp that can be regarded as being identical. This past actual temperature distribution data Drp is data obtained by inquiring, with respect to the past operation records, about an operation condition of the rotating electric machine 1 obtained when the newest piece of the actual temperature distribution data Dr has been acquired. This data is understood to presumptively indicate a temperature distribution obtained in a state where no abnormality has occurred in the rotating electric machine 1. In the present embodiment, this past actual temperature distribution data Drp is treated as the upon-photographing estimated temperature distribution data Dsp and is used for the abnormality determination processing by the abnormality determination unit 55.

In the above configuration, the abnormality determination unit 55 can use, for comparison to the actual temperature, the estimated temperature indicated by the past actual temperature distribution data Drp acquired by the second estimated temperature distribution acquisition unit 62. This past actual temperature distribution data Drp is data acquired based on a past operation record, and thus, by treating this past actual temperature distribution data Drp as the upon-photographing estimated temperature distribution data Dsp, the reliability of the estimated temperature can be increased, and the abnormality determination unit 55 can accurately determine whether an abnormality has occurred.

Datasets Dt are sequentially added to the database DB according to the present embodiment. This addition is summarized as follows. First, whether the actual temperature distribution data Dr acquired by the actual temperature distribution acquisition unit 51 indicates an abnormality is determined. For this determination, the estimated temperature indicated by the upon-photographing estimated temperature distribution data Dsp outputted by the physical model Pm may be used as a comparison target. When the actual temperature distribution data Dr is determined as not indicating an abnormality, this actual temperature distribution data Dr is associated with an upon-photographing operation parameter Ps (i.e., past upon-photographing operation parameter Psp) corresponding to this actual temperature distribution data Dr, whereby a dataset Dt is generated. This dataset Dt is added to the database DB.

In order to achieve the above function, the monitoring device 50 shown in FIG. 5 is provided with: a dataset generation unit 53 configured to generate a dataset Dt; and a storage control unit 56 configured to add the generated dataset Dt to the database DB. A procedure of generating the dataset Dt is as follows. It is assumed that the abnormality determination unit 55 has determined that no abnormality has occurred in the rotating electric machine 1 based on the result of comparison between the actual temperature indicated by the actual temperature distribution data Dr and the estimated temperature indicated by the upon-photographing estimated temperature distribution data Dsp acquired by the first estimated temperature distribution acquisition unit 61. In this case, a dataset Dt in which the actual temperature distribution data Dr (i.e., past actual temperature distribution data Drp) used for the comparison and the upon-photographing operation parameter Ps (i.e., past upon-photographing operation parameter Psp) corresponding to this actual temperature distribution data Dr are associated with each other is generated.

The past actual temperature distribution data Drp included in the dataset Dt is actual temperature distribution data Dr obtained when the abnormality determination unit 55 has determined in the past that no abnormality has occurred in the rotating electric machine 1. Therefore, the reliability of the dataset Dt stored in the memory 58 becomes high, and the reliability of the estimated temperature indicated by the past actual temperature distribution data Drp acquired by the second estimated temperature distribution acquisition unit 62 becomes high. Consequently, the abnormality determination unit 55 can accurately determine whether an abnormality has occurred based on the result of comparison between the estimated temperature indicated by the past actual temperature distribution data Drp acquired by the second estimated temperature distribution acquisition unit 62 and the actual temperature.

### <Additional Constituents (Second Example) of Monitoring Device 50>

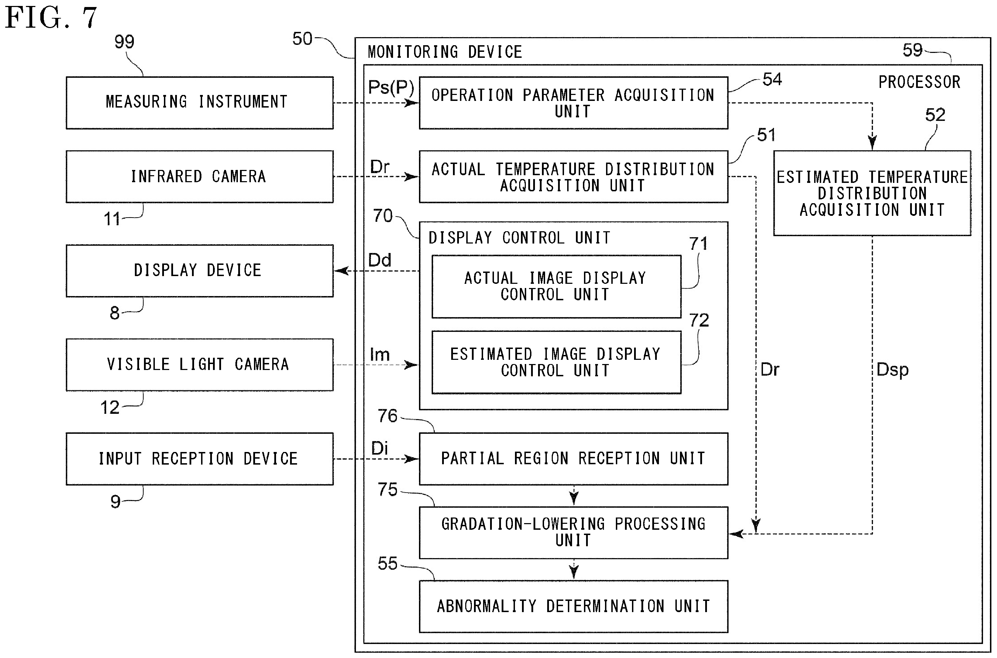

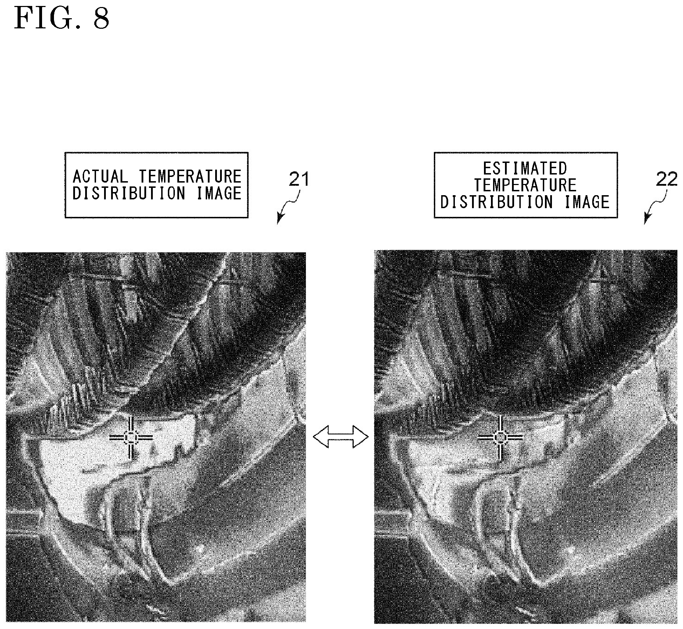

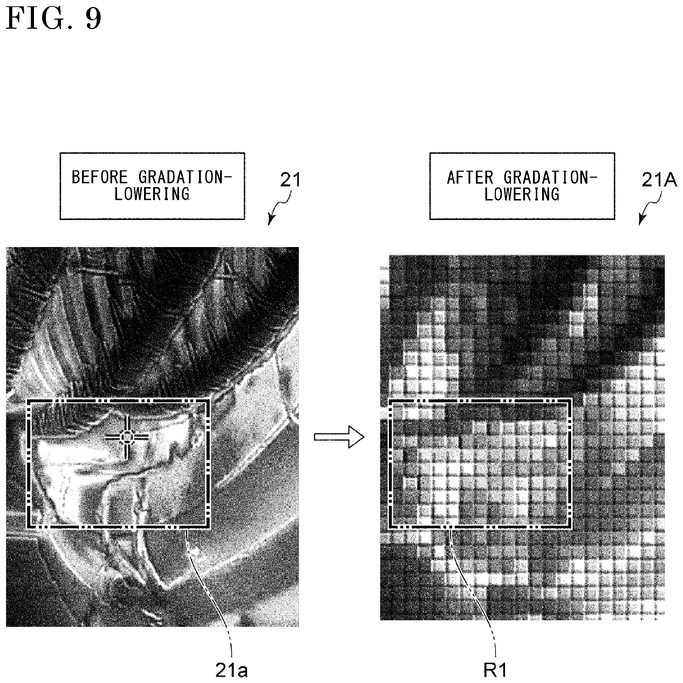

FIG. 7 is a schematic diagram (second example) showing constituents that may be additionally provided to the monitoring device 50. FIG. 8 is a schematic diagram showing an actual temperature distribution image 21 and an estimated temperature distribution image 22 according to an embodiment of the present disclosure. FIG. 9 is a schematic diagram showing a state before the actual temperature distribution image 21 is subjected to gradation-lowering processing and a state after the actual temperature distribution image 21 is subjected to gradation-lowering processing, according to an embodiment of the present disclosure.

The processor 59 of the monitoring device 50 shown in FIG. 7 is further provided with a display control unit 70. The display control unit 70 is configured to transmit, to the display device 8, display data Dd for turning the actual temperature distribution data Dr and the upon-photographing estimated temperature distribution data Dsp into respective images and displaying the images. The display data Dd in this example is data for causing the display device 8 to display the actual temperature distribution image 21 (see FIG. 8) and the estimated temperature distribution image 22 (see FIG. 8). Here, the actual temperature distribution image 21 is an image obtained by superimposing the distribution of the actual temperature indicated by the actual temperature distribution data Dr onto a taken image (not shown) indicated by the taken image data Im generated by the visible light camera 12. The estimated temperature distribution image 22 is an image obtained by superimposing the distribution of the estimated temperature indicated by the upon-photographing estimated temperature distribution data Dsp onto the above taken image. The actual temperature distribution image 21 and the estimated temperature distribution image 22 are respectively concrete forms of the actual temperature distribution data Dr and the estimated temperature distribution data Dp shown in FIG. 4. The upon-photographing estimated temperature distribution data Dsp to be superimposed onto the taken image may be obtained from the physical model Pm or any of the datasets Dt.

In order to achieve the above function, the display control unit 70 in this example includes: an actual image display control unit 71 for transmitting display data Dd for displaying the actual temperature distribution image 21 to the display device 8; and an estimated image display control unit 72 for transmitting display data Dd for displaying the estimated temperature distribution image 22 to the display device 8. The actual image display control unit 71 and the estimated image display control unit 72 may perform edge processing in advance on the taken image generated by the visible light camera 12 before superimposing the distribution of the actual temperature and the distribution of the estimated temperature, respectively.

In the configuration in which the monitoring device 50 is provided with the display control unit 70, an operator of the monitoring device 50 can visually recognize the distribution of the actual temperature inside the stator frame 4 and the distribution of the estimated temperature inside the stator frame 4 on the display device 8. In addition, in the configuration in which the display control unit 70 includes the actual image display control unit 71 and the estimated image display control unit 72, the display device 8 displays: the actual temperature distribution image 21 obtained by superimposing the distribution of the actual temperature onto an actually taken image showing the inside of the stator frame 4; and the estimated temperature distribution image 22 obtained by superimposing the distribution of the estimated temperature onto the taken image. Consequently, the operator can more intuitively understand the distribution of the actual temperature and the distribution of the estimated temperature.

As shown in FIG. 7, the processor 59 of the monitoring device 50 may be further provided with a gradation-lowering processing unit 75 for performing, on each of the actual temperature distribution data Dr and the upon-photographing estimated temperature distribution data Dsp, gradation-lowering processing to decrease a gradation value.

FIG. 9 shows a state before the actual temperature distribution image 21 is subjected to the gradation-lowering processing and a state after the actual temperature distribution image 21 is subjected to the gradation-lowering processing, and the actual temperature distribution image 21 having been subjected to the gradation-lowering processing is denoted by the reference character 21A.

The gradation-lowering processing for the actual temperature distribution image 21 is summarized as follows. First, processing for decreasing a resolution is performed on the actual temperature distribution image 21 (the gradation-lowering processing includes processing for decreasing the resolution of the image data). During this processing, a plurality of pixels (e.g., four pixels adjacent to each other) forming the actual temperature distribution image 21 are grouped to be treated as one new pixel. Then, the average value of brightness values of the plurality of pixels is assigned to the one new pixel. For example, the average value of brightness values in each of red (R), green (G), and blue (B) is calculated, and the averages of the three types of brightness values are assigned to the one pixel. Such processing is performed over the entire region of the actual temperature distribution image 21, whereby the actual temperature distribution image 21A having been subjected to the gradation-lowering processing is generated. Similar processing is performed also on the estimated temperature distribution image 22, but detailed description thereof will be omitted in order to avoid repetitive description. The actual temperature distribution data Dr and the upon-photographing estimated temperature distribution data Dsp each having been subjected to the gradation-lowering processing are transmitted to the abnormality determination unit 55 and used for the determination processing.

In the above configuration, the gradation-lowering processing unit 75 performs the gradation-lowering processing on the actual temperature distribution data Dr and the upon-photographing estimated temperature distribution data Dsp, and the abnormality determination unit 55 determines whether an abnormality has occurred in the rotating electric machine 1 based on the actual temperature distribution data Dr and the upon-photographing estimated temperature distribution data Dsp each having been subjected to the gradation-lowering processing. The data sizes of the actual temperature distribution data Dr and the upon-photographing estimated temperature distribution data Dsp can be decreased through the gradation-lowering processing, whereby the determination processing to be performed by the abnormality determination unit 55 can be further facilitated.

The above gradation-lowering processing may be performed on a part of each of the actual temperature distribution image 21 and the estimated temperature distribution image 22. For example, the operator may be able to specify a region of the actual temperature distribution image 21 that is not to be subjected to the gradation-lowering processing.

In order to achieve such a function, the processor 59 of the monitoring device 50 shown in FIG. 7 is further provided with a partial region reception unit 76. The partial region reception unit 76 is configured to receive partial region specifying data Di which specifies an actual image partial region 21a (see FIG. 9) forming a part of the actual temperature distribution image 21. The operator may input, while viewing the actual temperature distribution image 21 displayed by the display device 8, an instruction to specify the actual image partial region 21a to an input reception device 9 as a constituent of the monitoring system 10. Consequently, the partial region specifying data Di is transmitted from the input reception device 9 to the partial region reception unit 76.

For example, it is also allowable for the operator to specify, as the actual image partial region 21a, only a region of the actual temperature distribution image 21 that shows the to-be-photographed object 18 for which whether an abnormality has occurred is to be determined. In this case, since the taken image is included in the actual temperature distribution image 21, it is easy for the operator to intuitively specify the actual image partial region 21a.

It is assumed that the actual image partial region 21a has been set in the actual temperature distribution image 21 as shown in FIG. 9. In this case, a region R1 of the actual temperature distribution image 21A having been subjected to the gradation-lowering processing is not subjected to gradation lowing as in FIG. 9, and the actual image partial region 21a on the left side is displayed in the region R1 as is.

Furthermore, the gradation-lowering processing unit 75 in this example is configured to perform the gradation-lowering processing on a part of the estimated temperature distribution image 22 as well (see FIG. 8). More specifically, the gradation-lowering processing may be performed while an estimated image partial region (not shown) as a region of the estimated temperature distribution image 22 that corresponds to the actual image partial region 21a is avoided. The estimated image partial region can be specified as long as the correspondence relationship between the region R (see FIG. 4) indicated by the actual temperature distribution data Dr and the region S (see FIG. 4) indicated by the estimated temperature distribution data Ds is known in advance. However, the present disclosure is not limited thereto, and the operator may input an instruction to specify the estimated image partial region of the estimated temperature distribution image 22 to the input reception device 9.

In the above configuration, the operator can specify, as each of the actual image partial region 21a and the estimated image partial region, an image region that is important for determining whether an abnormality has occurred. That is, the operator can specify a region on which focus should be particularly placed for determining whether an abnormality has occurred in the rotating electric machine 1, and the gradation-lowering processing is not performed in this region. Since the data size of the region on which focus should be particularly placed is maintained, the abnormality determination unit 55 can accurately determine whether an abnormality has occurred.

### <Abnormality Monitoring Method>

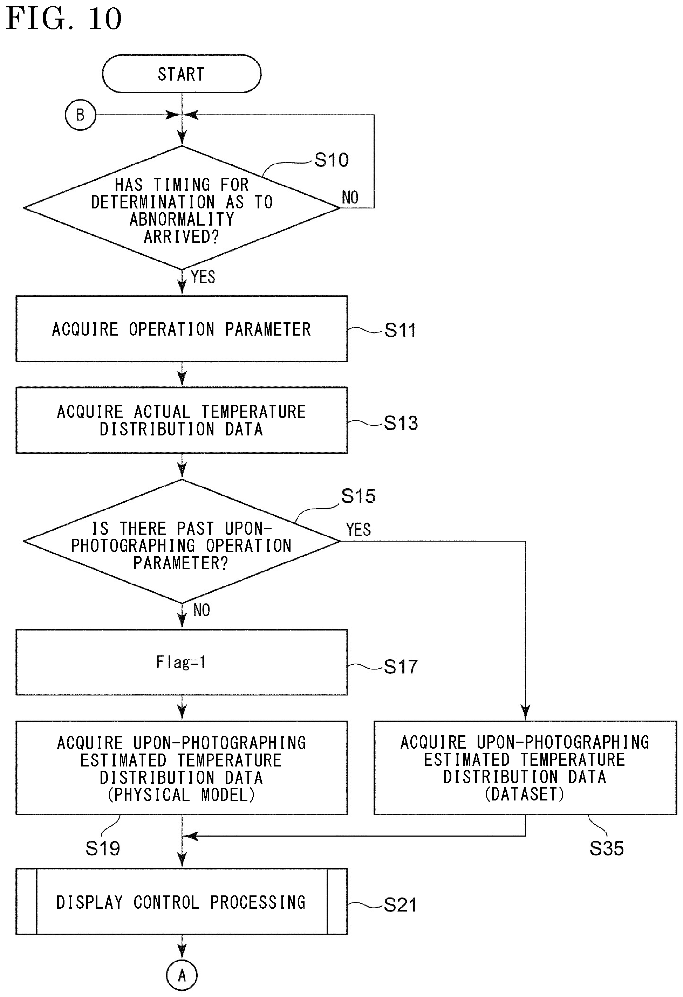

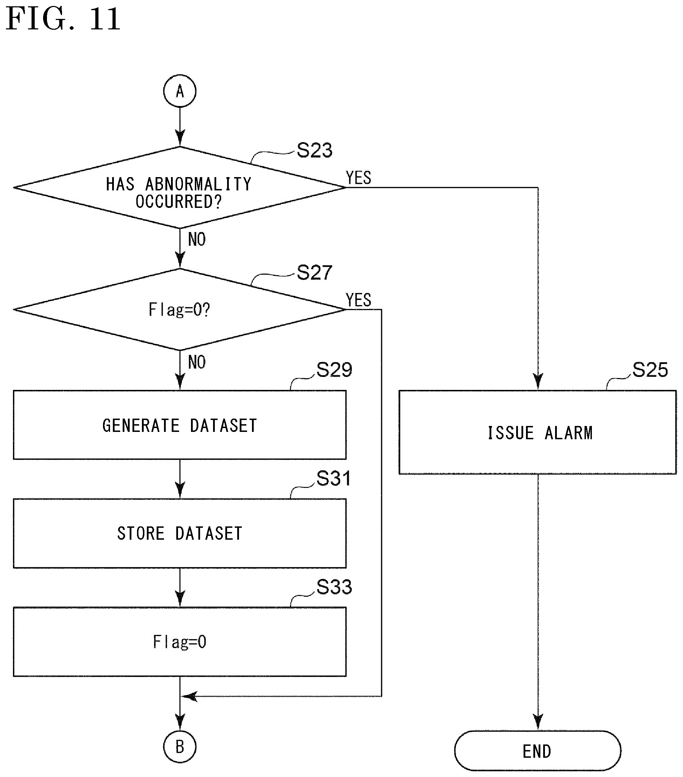

FIG. 10 to FIG. 12 are each a flowchart showing a monitoring method for the rotating electric machine 1 according to an embodiment of the present disclosure. The flowcharts in this example are performed by the processor 59 of the monitoring device 50. Hereinafter, "step" is sometimes abbreviated as "S".

First, the processor 59 determines whether a timing for determination as to an abnormality in the rotating electric machine 1 has arrived (S10). The processor 59 waits until a timing for determination as to an abnormality arrives (S10: NO). When determining that a timing for determination as to an abnormality has arrived (S10: YES), the processor 59 acquires an operation parameter P based on a measurement result from the measuring instrument 99 (S11) and acquires actual temperature distribution data Dr obtained through photographing by the infrared camera 11 (S13). The processor 59 performing S11 is an example of the operation parameter acquisition unit 54, and the processor 59 performing S13 is an example of the actual temperature distribution acquisition unit 51.

Thereafter, the processor 59 determines whether a past upon-photographing operation parameter Psp that can be regarded as being identical to the operation parameter P acquired in S11 is included in any of the datasets Dt stored in the database DB (S15). The processor 59 performing S15 is an example of the record determination unit 63. When making a negative determination result in S15 (S15: NO), the processor 59 overwrites a flag stored as "0" in the memory 58 before this flowchart starts, by "1" (S17).

Then, the processor 59 inputs the operation parameter P acquired in S11 to the physical model Pm to acquire upon-photographing estimated temperature distribution data Dsp (S19). The processor 59 performing S19 is an example of the first estimated temperature distribution acquisition unit 61. Then, the processor 59 performs display control processing for controlling the display device 8 (S21). The processor 59 performing S21 is an example of the display control unit 70 (detailed description of S21 will be given later).

Then, the processor 59 determines whether an abnormality has occurred in the rotating electric machine 1 based on a result of comparison between the actual temperature indicated by the actual temperature distribution data Dr acquired in S13 and the estimated temperature indicated by the upon-photographing estimated temperature distribution data Dsp acquired in S19 (S23). The processor 59 performing S23 is an example of the abnormality determination unit 55. When determining that an abnormality has occurred in the rotating electric machine 1 (S23: YES), the processor 59 causes, for example, the display device 8 or the like to display an alert to issue an alarm (S25). When performing S25, the processor 59 may further perform processing for stopping the rotating electric machine 1 being operated. After S25 is performed, this flowchart is ended.

Meanwhile, when determining no abnormality has occurred in the rotating electric machine 1 (S23: NO), the processor 59 determines whether the flag stored in the memory 58 indicates "0" (S27). When the flag is overwritten by "1" in S17 (S27: NO), the processor 59 sets the operation parameter P acquired in S11 as a past upon-photographing operation parameter Psp and sets the actual temperature distribution data Dr acquired in S13 as past actual temperature distribution data Drp to generate a dataset Dt (S29). The processor 59 performing S29 is an example of the dataset generation unit 53. Furthermore, the processor 59 adds the generated dataset Dt to the database DB stored in the memory 58 (S31). The processor 59 performing S31 is an example of the storage control unit 56. Thereafter, the processor 59 overwrites the flag by "0" (S33) and returns the process to S10.

As S15 and S17 to S33 described above are repeated, datasets Dt stored in the database DB are accumulated, and an affirmative determination result is eventually made in S15 (S15: YES). In this case, the processor 59 acquires, as upon-photographing estimated temperature distribution data Dsp, a piece of the past actual temperature distribution data Drp included in a specific dataset Dt among the stored datasets Dt (S35). The processor 59 performing S35 is an example of the second estimated temperature distribution acquisition unit 62.

After S35 is performed, the process advances to S21. In S23, whether an abnormality has occurred in the rotating electric machine 1 is determined based on a result of comparison between the actual temperature indicated by the actual temperature distribution data Dr acquired in S13 and the estimated temperature indicated by the upon-photographing estimated temperature distribution data Dsp acquired in S35. When determining that no abnormality has occurred (S23: NO), the processor 59 skips S29 to S33 and returns the process to S10 since the flag indicates "0" (S27: YES).

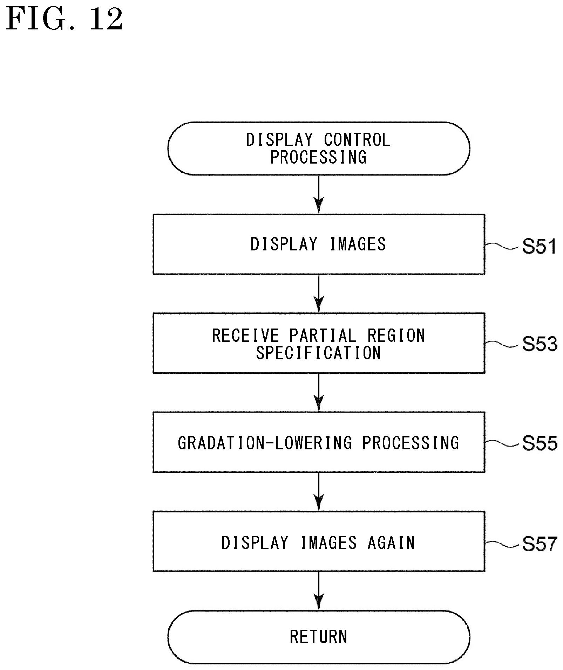

The display control processing in FIG. 10 (S21) will be described in detail with reference to FIG. 12. The processor 59 transmits, to the display device 8, display data Dd for displaying the actual temperature distribution data Dr acquired in S13 and the upon-photographing estimated temperature distribution data Dsp acquired in S19 or S35 as images (S51). S51 will be described further in detail as follows. That is, the processor 59 transmits, to the display device 8, display data Dd for causing the display device 8 to display the actual temperature distribution image 21 and the estimated temperature distribution image 22. The processor 59 performing S51 is an example of the actual image display control unit 71 and the estimated image display control unit 72.

Then, the processor 59 receives partial region specifying data Di which specifies an actual image partial region 21a forming a part of the actual temperature distribution image 21 (S51). At this time, an estimated image partial region in the estimated temperature distribution image 22 is also specified together. The processor 59 performing S51 is an example of the partial region reception unit 76.

Then, the processor 59 performs the gradation-lowering processing on a part of the actual temperature distribution image 21 while avoiding the actual image partial region 21a and further performs the gradation-lowering processing on a part of the estimated temperature distribution image 22 while avoiding the estimated image partial region (not shown) (S55). The processor 59 performing 55 is an example of the gradation-lowering processing unit 75. Thereafter, the processor 59 causes the display device 8 to display the actual temperature distribution image 21A having been subjected to the gradation-lowering processing and the estimated temperature distribution image having been subjected to the gradation-lowering processing (not shown) (S57) and returns the process to the flowchart in FIG. 10.

At least one of the steps shown in FIG. 10 to FIG. 12 may be performed by an operator instead of the processor 59. For example, regarding the determination processing in S23, as long as the display device 8 displays the actual temperature distribution image 21 and the estimated temperature distribution image 22, the operator may visually determine, through comparison between both images, whether an abnormality has occurred in the rotating electric machine 1.

### <Others>

The above processor 59 is implemented by a CPU, a GPU, an MPU, a DSP, a combination thereof, or the like. A processor 59 according to another embodiment may be implemented by an integrated circuit such as a PLD, an ASIC, an FPGA, or an MCU. The above memory 58 is configured to allow various types of data to be stored therein in a transitory or non-transitory manner and is implemented by, for example, at least one of a RAM, a ROM, or a flash memory. The processor 59 performs various types of calculation processing according to a command in a program loaded to the memory 58.

At least a part of the configuration of the monitoring device 50 shown in FIG. 7 may be incorporated in the monitoring device 50 shown in FIG. 5.

### <Summary>

The features described in the above several embodiments are understood as follows, for example.
1) A monitoring device (50) according to at least one embodiment of the present disclosure is
   a monitoring device for monitoring a rotating electric machine (1) provided with a stator frame (4) accommodating a rotor (6) and a stator (2), the monitoring device comprising:
   an actual temperature distribution acquisition unit (51) for acquiring actual temperature distribution data (Dr) indicating a distribution of an actual temperature inside the stator frame through photographing by an infrared camera (11) disposed inside the stator frame;
   an estimated temperature distribution acquisition unit (52) for acquiring upon-photographing estimated temperature distribution data (Dsp) indicating a distribution of an estimated temperature inside the stator frame, the distribution corresponding to an upon-photographing operation parameter (Ps) as an operation parameter of the rotating electric machine upon the photographing by the infrared camera; and
   an abnormality determination unit (55) for determining whether an abnormality has occurred in the rotating electric machine based on a result of comparison between the actual temperature indicated by the actual temperature distribution data and the estimated temperature indicated by the upon-photographing estimated temperature distribution data.

In the configuration of the above 1), the abnormality determination unit can determine, when the difference value between the actual temperature and the estimated temperature is large, that an abnormality has occurred in the rotating electric machine. Since whether an abnormality has occurred in the rotating electric machine is determined based on the temperatures, a sign of an abnormality to be visually recognized through the visible light camera or the like can be detected before the abnormality actually occurs. Therefore, a monitoring device capable of detecting such an abnormality in the rotating electric machine early is realized.

2) Some of the embodiments are directed to the monitoring device according to the above 1), wherein
the estimated temperature distribution acquisition unit includes a first estimated temperature distribution acquisition unit (61) for acquiring the upon-photographing estimated temperature distribution data by inputting the upon-photographing operation parameter to a physical model (Pm) configured to output, when the operation parameter is inputted thereto, estimated temperature distribution data (Dp) indicating a distribution of the estimated temperature inside the stator frame.

In the configuration of the above 2), the upon-photographing estimated temperature distribution data is acquired by inputting the upon-photographing operation parameter to the physical model. Consequently, the abnormality determination unit can determine, without using data indicating a distribution of a past actual temperature, whether an abnormality has occurred in the rotating electric machine. Therefore, even in a case where the rotating electric machine is operated at an operation point at which operation has not been performed in the past, the abnormality determination unit can determine whether an abnormality has occurred in the rotating electric machine.

3) Some of the embodiments are directed to the monitoring device according to the above 1) or 2), wherein
the estimated temperature distribution acquisition unit includes
a record determination unit (63) which uses datasets (Dt) in which pieces of past actual temperature distribution data (Drp) each indicating a distribution of an actual temperature inside the stator frame upon past photographing and past upon-photographing operation parameters (Psp) as the operation parameters obtained when the pieces of past actual temperature distribution data have been acquired are associated with each other, the record determination unit (63) being for determining whether the past upon-photographing operation parameter that can be regarded as being identical to the upon-photographing operation parameter is included in any of the datasets (Dt), and
a second estimated temperature distribution acquisition unit (62) for acquiring a piece of the past actual temperature distribution data as the upon-photographing estimated temperature distribution data when the record determination unit determines that the past upon-photographing operation parameter that can be regarded as being identical is included in any of the datasets, the piece of the past actual temperature distribution data being associated with the past upon-photographing operation parameter.

In the configuration of the above 3), the abnormality determination unit can use, for comparison to the actual temperature, the temperature distribution indicated by the past actual temperature distribution data acquired by the second estimated temperature distribution acquisition unit. This past actual temperature distribution data is data based on a past operation record of the rotating electric machine, and thus, by treating this past actual temperature distribution data as the upon-photographing estimated temperature distribution data, the reliability of the estimated temperature can be increased, and the abnormality determination unit can accurately determine whether an abnormality has occurred.

4) Some of the embodiments are directed to the monitoring device according to the above 3), wherein
the estimated temperature distribution acquisition unit includes a first estimated temperature distribution acquisition unit (61) for acquiring the upon-photographing estimated temperature distribution data by inputting the upon-photographing operation parameter to a physical model configured to output, when the operation parameter is inputted thereto, estimated temperature distribution data indicating a distribution of the estimated temperature inside the stator frame, and
the monitoring device further comprises
   a dataset generation unit (53) for generating, when the abnormality determination unit determines that the abnormality has not occurred based on the result of comparison between the actual temperature indicated by the actual temperature distribution data and the estimated temperature indicated by the upon-photographing estimated temperature distribution data acquired by the first estimated temperature distribution acquisition unit, the dataset in which the past upon-photographing operation parameter as the upon-photographing operation parameter corresponding to the upon-photographing estimated temperature distribution data used for the comparison and the past actual temperature distribution data as the actual temperature distribution data used for the comparison are associated with each other, and
   a storage control unit (56) for causing the generated dataset to be stored in a memory (58).

In the configuration of the above 4), the past actual temperature distribution data included in the dataset is actual temperature distribution data obtained when the abnormality determination unit has determined in the past that no abnormality has occurred in the rotating electric machine. Therefore, the reliability of the dataset stored in the memory becomes high, and the reliability of the estimated temperature indicated by the past actual temperature distribution data acquired by the second estimated temperature distribution acquisition unit becomes high. Consequently, the abnormality determination unit can accurately determine whether an abnormality has occurred based on the result of comparison between the estimated temperature indicated by the past actual temperature distribution data acquired by the second estimated temperature distribution acquisition unit and the actual temperature.

5) Some of the embodiments are directed to the monitoring device according to any one of the above 1) to 4), further comprising
a display control unit (70) for transmitting, to a display device (8), display data (Dd) for displaying the actual temperature distribution data and the upon-photographing estimated temperature distribution data as respective images.

In the configuration of the above 5), an operator of the monitoring device can visually recognize the distribution of the actual temperature inside the stator frame and the distribution of the estimated temperature inside the stator frame on the display device.

6) Some of the embodiments are directed to the monitoring device according to the above 5), wherein
the display control unit is further provided with
an actual image display control unit (71) for causing the display device to display an actual temperature distribution image (21) obtained by superimposing the distribution of the actual temperature indicated by the actual temperature distribution data onto a taken image obtained through photographing by a visible light camera (12) disposed inside the stator frame, and
an estimated image display control unit (72) for causing the display device to display an estimated temperature distribution image (22) obtained by superimposing the distribution of the estimated temperature indicated by the upon-photographing estimated temperature distribution data onto the taken image.

In the configuration of the above 6), the display device displays: the actual temperature distribution image obtained by superimposing the distribution of the actual temperature onto an actually taken image showing the inside of the stator frame; and the estimated temperature distribution image obtained by superimposing the distribution of the estimated temperature onto the taken image. Consequently, the operator can more intuitively understand the distribution of the actual temperature and the distribution of the estimated temperature.

7) Some of the embodiments are directed to the monitoring device according to any one of the above 1) to 6), wherein
each of the actual temperature distribution data and the upon-photographing estimated temperature distribution data is image data, and
the monitoring device further comprises a gradation-lowering processing unit (75) for performing, on each of the actual temperature distribution data and the upon-photographing estimated temperature distribution data, gradation-lowering processing to decrease a gradation value.

In the configuration of the above 7), the data sizes of the actual temperature distribution data and the upon-photographing estimated temperature distribution data can be decreased through the gradation-lowering processing, whereby the determination processing to be performed by the abnormality determination unit can be further facilitated.

8) Some of the embodiments are directed to the monitoring device according to the above 7), further comprising
a partial region reception unit (76) for receiving partial region specifying data (Di) which specifies an actual image partial region (21a) forming a part of an image (actual temperature distribution image 21) indicated by the actual temperature distribution data, wherein
the gradation-lowering processing unit is configured to perform the gradation-lowering processing on a part of the actual temperature distribution data while avoiding the actual image partial region and perform the gradation-lowering processing on a part of the upon-photographing estimated temperature distribution data while avoiding an estimated image distribution region which corresponds to the actual image partial region and which is in an image (estimated temperature distribution image 22) indicated by the upon-photographing estimated temperature distribution data.

In the configuration of the above 8), an image region that is important for determining whether an abnormality has occurred can be specified as each of the actual image partial region and the estimated image partial region. That is, the operator can specify a region on which focus should be particularly placed for determining whether an abnormality has occurred in the rotating electric machine, and the gradation-lowering processing is not performed in this region. Since the data size of the region on which focus should be particularly placed is maintained, the abnormality determination unit can accurately determine whether an abnormality has occurred.

9) Some of the embodiments are directed to the monitoring device according to any one of the above 1) to 8), wherein
a to-be-photographed object (18) for the infrared camera includes at least one of
a coil end (3a) of a stator coil (3) wound on the stator,
a lead-out portion (3b) of the stator coil,
an end portion (5a), in an axial direction of the rotating electric machine, of a stator core (5) of the stator,
an end portion (6c), in the axial direction, of a rotor core (6a) of the rotor, or
an outer circumference portion (6d) of the rotor core.

In the configuration of the above 9), a constituent that tends to have a comparatively high temperature during operation of the rotating electric machine is included as the to-be-photographed object. That is, a constituent that runs a high risk of sustaining an abnormality is included as the to-be-photographed object, and thus failure to detect an abnormality in the rotating electric machine is suppressed.

10) A monitoring system (10) according to at least one embodiment of the present disclosure comprises:
the monitoring device (50) according to any one of the above 1) to 9); and
the infrared camera (11).

In the configuration of the above 10), the same technical advantages as those in the above 1) are obtained.

An infrared camera rail (31) movably supporting the infrared camera (11) is further provided.

In the configuration of the above 11), a photographing range of the infrared camera can be widened, whereby monitoring can be performed over a wide range inside the stator frame.

12) A monitoring method according to at least one embodiment of the present disclosure is
a monitoring method for monitoring a rotating electric machine (1) provided with a stator frame (4) accommodating a rotor (6) and a stator (2), the monitoring method comprising:
an actual temperature distribution acquisition step (S13) of acquiring actual temperature distribution data (Dr) indicating a distribution of an actual temperature inside the stator frame through photographing by an infrared camera (11) disposed inside the stator frame;
an estimated temperature distribution acquisition step (S19, S35) of acquiring upon-photographing estimated temperature distribution data (Dsp) indicating a distribution of an estimated temperature inside the stator frame, the distribution corresponding to an upon-photographing operation parameter (Ps) as an operation parameter (P) of the rotating electric machine upon the photographing by the infrared camera; and
an abnormality determination step (S23) of determining whether an abnormality has occurred in the rotating electric machine based on a result of comparison between the actual temperature indicated by the actual temperature distribution data and the estimated temperature indicated by the upon-photographing estimated temperature distribution data.

In the configuration of the above 12), the same technical advantages as those in the above 1) are obtained.

### DESCRIPTION OF THE REFERENCE CHARACTERS

1 rotating electric machine
2 stator
3 stator coil
3a coil end
3b lead-out portion
4 stator frame
5 stator core
5a end portion
6 rotor
6a rotor core
6b rotor coil
6c end portion
6d outer circumference portion
7 rotor shaft
7C axial line
8 display device
9 input reception device
10 monitoring system
11 infrared camera
12 visible light camera
18 to-be-photographed object
21 actual temperature distribution image
21A actual temperature distribution image
21a actual image partial region
22 estimated temperature distribution image
31 infrared camera rail
32 visible light camera rail
50 monitoring device
51 actual temperature distribution acquisition unit
52 estimated temperature distribution acquisition unit
53 dataset generation unit
54 operation parameter acquisition unit
55 abnormality determination unit
56 storage control unit
58 memory
59 processor
61 first estimated temperature distribution acquisition unit
62 second estimated temperature distribution acquisition unit
63 record determination unit
70 display control unit
71 actual image display control unit
72 estimated image display control unit
75 gradation-lowering processing unit
76 partial region reception unit
99 measuring instrument
B1, B2 bearing
Dd display data
Di partial region specifying data
Dp estimated temperature distribution data
Dr actual temperature distribution data
Drp past actual temperature distribution data
Ds estimated temperature distribution data
Dsp upon-photographing estimated temperature distribution data
Dt dataset
Im taken image data
P operation parameter
Pm physical model
Ps upon-photographing operation parameter
Psp past upon-photographing operation parameter
R, S region
r, s partial region

## Claims

1. A monitoring device for monitoring a rotating electric machine provided with a stator frame accommodating a rotor and a stator, the monitoring device comprising:
an actual temperature distribution acquisition unit for acquiring actual temperature distribution data indicating a distribution of an actual temperature inside the stator frame through photographing by an infrared camera disposed inside the stator frame;
an estimated temperature distribution acquisition unit for acquiring upon-photographing estimated temperature distribution data indicating a distribution of an estimated temperature inside the stator frame, the distribution corresponding to an upon-photographing operation parameter as an operation parameter of the rotating electric machine upon the photographing by the infrared camera; and
an abnormality determination unit for determining whether an abnormality has occurred in the rotating electric machine based on a result of comparison between the actual temperature indicated by the actual temperature distribution data and the estimated temperature indicated by the upon-photographing estimated temperature distribution data.

2. The monitoring device according to claim 1, wherein
the estimated temperature distribution acquisition unit includes a first estimated temperature distribution acquisition unit for acquiring the upon-photographing estimated temperature distribution data by inputting the upon-photographing operation parameter to a physical model configured to output, when the operation parameter is inputted thereto, estimated temperature distribution data indicating a distribution of the estimated temperature inside the stator frame.

3. The monitoring device according to claim 1 or 2, wherein
the estimated temperature distribution acquisition unit includes
a record determination unit which uses datasets in which pieces of past actual temperature distribution data each indicating a distribution of an actual temperature inside the stator frame upon past photographing and past upon-photographing operation parameters as the operation parameters obtained when the pieces of past actual temperature distribution data have been acquired are associated with each other, the record determination unit being for determining whether the past upon-photographing operation parameter that can be regarded as being identical to the upon-photographing operation parameter is included in any of the datasets, and
a second estimated temperature distribution acquisition unit for acquiring a piece of the past actual temperature distribution data as the upon-photographing estimated temperature distribution data when the record determination unit determines that the past upon-photographing operation parameter that can be regarded as being identical is included in any of the datasets, the piece of the past actual temperature distribution data being associated with the past upon-photographing operation parameter.

4. The monitoring device according to claim 3, wherein
the estimated temperature distribution acquisition unit includes a first estimated temperature distribution acquisition unit for acquiring the upon-photographing estimated temperature distribution data by inputting the upon-photographing operation parameter to a physical model configured to output, when the operation parameter is inputted thereto, estimated temperature distribution data indicating a distribution of the estimated temperature inside the stator frame, and
the monitoring device further comprises
a dataset generation unit for generating, when the abnormality determination unit determines that the abnormality has not occurred based on the result of comparison between the actual temperature indicated by the actual temperature distribution data and the estimated temperature indicated by the upon-photographing estimated temperature distribution data acquired by the first estimated temperature distribution acquisition unit, the dataset in which the past upon-photographing operation parameter as the upon-photographing operation parameter corresponding to the upon-photographing estimated temperature distribution data used for the comparison and the past actual temperature distribution data as the actual temperature distribution data used for the comparison are associated with each other, and
a storage control unit for causing the generated dataset to be stored in a memory.

5. The monitoring device according to claim 1 or 2, further comprising
a display control unit for transmitting, to a display device, display data for displaying the actual temperature distribution data and the upon-photographing estimated temperature distribution data as respective images.

6. The monitoring device according to claim 5, wherein
the display control unit is further provided with
an actual image display control unit for causing the display device to display an actual temperature distribution image obtained by superimposing the distribution of the actual temperature indicated by the actual temperature distribution data onto a taken image obtained through photographing by a visible light camera disposed inside the stator frame, and
an estimated image display control unit for causing the display device to display an estimated temperature distribution image obtained by superimposing the distribution of the estimated temperature indicated by the upon-photographing estimated temperature distribution data onto the taken image.

7. The monitoring device according to claim 1 or 2, wherein
each of the actual temperature distribution data and the upon-photographing estimated temperature distribution data is image data, and
the monitoring device further comprises a gradation-lowering processing unit for performing, on each of the actual temperature distribution data and the upon-photographing estimated temperature distribution data, gradation-lowering processing to decrease a gradation value.

8. The monitoring device according to claim 7, further comprising
a partial region reception unit for receiving partial region specifying data which specifies an actual image partial region forming a part of an image indicated by the actual temperature distribution data, wherein
the gradation-lowering processing unit is configured to perform the gradation-lowering processing on a part of the actual temperature distribution data while avoiding the actual image partial region and perform the gradation-lowering processing on a part of the upon-photographing estimated temperature distribution data while avoiding an estimated image distribution region which corresponds to the actual image partial region and which is in an image indicated by the upon-photographing estimated temperature distribution data.

9. The monitoring device according to claim 1 or 2, wherein
a to-be-photographed object for the infrared camera includes at least one of
a coil end of a stator coil wound on the stator,
a lead-out portion of the stator coil,
an end portion, in an axial direction of the rotating electric machine, of a stator core of the stator,
an end portion, in the axial direction, of a rotor core of the rotor, or
an outer circumference portion of the rotor core.

10. A monitoring system comprising:
the monitoring device according to claim 1 or 2; and
the infrared camera.

11. The monitoring system according to claim 10, further comprising
an infrared camera rail movably supporting the infrared camera.

12. A monitoring method for monitoring a rotating electric machine provided with a stator frame accommodating a rotor and a stator, the monitoring method comprising:
an actual temperature distribution acquisition step of acquiring actual temperature distribution data indicating a distribution of an actual temperature inside the stator frame through photographing by an infrared camera disposed inside the stator frame;
an estimated temperature distribution acquisition step of acquiring upon-photographing estimated temperature distribution data indicating a distribution of an estimated temperature inside the stator frame, the distribution corresponding to an upon-photographing operation parameter as an operation parameter of the rotating electric machine upon the photographing by the infrared camera; and
an abnormality determination step of determining whether an abnormality has occurred in the rotating electric machine based on a result of comparison between the actual temperature indicated by the actual temperature distribution data and the estimated temperature indicated by the upon-photographing estimated temperature distribution data.
